(19) Europäisches Patentamt
European Patent Office
Office européen des brevets

(11) EP 1 473 325 B1

(12) **FASCICULE DE BREVET EUROPEEN**

(45) Date de publication et mention de la délivrance du brevet:
**19.12.2007 Bulletin 2007/51**

(51) Int Cl.:
***C08L 81/06*** *(2006.01)* ***C08L 63/00*** *(2006.01)*

(21) Numéro de dépôt: **04101865.6**

(22) Date de dépôt: **30.04.2004**

(54) **Matériau à haute tenacité à base d'une résine vinylester et/ou d'une résine epoxyde, son procédé de fabrication, matériau composite le comprenant et ses utilisations**

Hochfestes Material basierend auf Vinylester und/oder Epoxydharz, Herstellungsverfahren, Verbundmaterial und Verwendung

High strength material based on vinylester and/or epoxyde resin, preparation process, composite material and use

(84) Etats contractants désignés:
**DE IT**

(30) Priorité: **02.05.2003 FR 0350138**

(43) Date de publication de la demande:
**03.11.2004 Bulletin 2004/45**

(73) Titulaire: **ASTRIUM SAS**
**75016 Paris (FR)**

(72) Inventeurs:
- **Chauray, Estelle**
  **33600, Pessac (FR)**
- **Defoort, Brigitte**
  **33160, Saint Medard en Jalles (FR)**
- **Boursereau, Frédéric**
  **33110, le Bouscat (FR)**
- **Soum, Alain**
  **33170, Gradignan (FR)**

(74) Mandataire: **Poulin, Gérard**
**BREVALEX**
**3, rue du Docteur Lancereaux**
**75008 Paris (FR)**

(56) Documents cités:
**WO-A-97/43339** **US-A- 5 434 226**

- **S WANG, J WANG, Q JI, A R SHULTZ, T C WARD, J E MCGRATH: "Miscibility and Morphologies of Poly(Arylene ether phenyl phosphine oxide/ sulfone) Copolymer/Vinyl Ester Resin Mixtures and Their Cured Networks" JOURNAL OF POLYMER SCIENCE: PART B: POLYMER PHYSICS, vol. 38, 2000, pages 2409-2421, XP002266573**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 473 325 B1

Printed by Jouve, 75001 PARIS (FR)

## Description

### DOMAINE TECHNIQUE

La présente invention se rapporte à un matériau à haute ténacité à base d'une résine vinylester et/ou d'une résine époxyde, et à son procédé de fabrication.

Elle se rapporte également à un matériau composite constitué d'une matrice organique à haute ténacité à base d'une résine vinylester et/ou époxyde, et d'un renfort, ainsi qu'aux utilisations de ce matériau composite.

Un tel matériau composite est utile dans de très nombreux domaines comme les industries automobile, ferroviaire, navale, aéronautique et aérospatiale - que ce soit pour la fabrication de pièces de structure, de pièces de moteur, de pièces d'habitacle ou de pièces de carrosserie -, l'industrie de l'armement, par exemple, pour la fabrication de missiles et de tubes lance-missiles, ou encore dans le domaine des loisirs et des sports, par exemple pour la fabrication d'articles destinés aux sports nautiques et aux sports de glisse.

Notamment, le matériau composite selon l'invention est apte à être utilisé pour la fabrication de toutes les pièces susceptibles d'être réalisées en un matériau composite par bobinage, drappage ou préforme et RTM (Resin Transfer Moulding) pour la construction d'un avion comme des poutres, des caissons de voilure, des élevons, des portes, des éléments de fuselage ou de carénage, ..., ou pour la construction d'une fusée comme des enveloppes de moteurs à poudre, des réservoirs (cryogéniques ou non), des jupes, des éléments de carénage, des bâtis de moteurs, ..., ou encore celle d'un satellite (structures, réservoirs, ...).

### ETAT DE LA TECHNIQUE ANTERIEURE

Les matériaux composites permettent d'exploiter les propriétés mécaniques exceptionnelles de certains matériaux que l'on ne sait pas fabriquer sous forme massive, mais seulement sous forme de filaments. On utilise alors des polymères organiques (résines) comme matrices pour lier les filaments entre eux. Mais, si l'on veut obtenir des matériaux composites à hautes performances, il est indispensable que les matrices aient elles-mêmes de bonnes propriétés mécaniques.

Or, d'une façon générale, les résines dites "thermodurcissables" - par opposition aux résines dites "thermoplastiques" - telles que les résines polyesters, époxydes et vinylesters, sont rigides après polymérisation et présentent un allongement à la rupture et une résistance au choc médiocre.

On sait de longue date que la ténacité (ou "fracture toughness" en langue anglaise) d'un matériau, c'est-à-dire son aptitude à s'opposer à la propagation brutale de fissures, peut être améliorée en y incorporant des particules de faibles dimensions. En effet, lorsqu'une fissure se forme dans le matériau, la propagation de cette fissure est ralentie par les particules qui agissent comme des renforts. Des mécanismes de déformation plastique, et notamment les phénomènes de cavitation et de bandes de cisaillement, assurent alors un renforcement du matériau.

L'idée généralement considérée pour pallier la faible ténacité des résines "thermodurcissables" est donc de leur incorporer un polymère thermoplastique dont le rôle est de concentrer les contraintes et de réguler l'énergie dégagée lors d'un impact ou d'une fissuration du matériau résultant. Classiquement, cette incorporation s'effectue en deux étapes : une première étape de mélange du polymère thermoplastique et de la résine thermodurcissable, puis une deuxième étape de polymérisation du mélange résultant à température élevée, laquelle s'accompagne d'une séparation de phase ou démixtion qui conduit à la formation de nodules de thermoplastique au sein de la résine.

En ce qui concerne les résines époxydes polymérisées à chaud, le polyéthersulfone (PES), polymère thermoplastique haute performance possédant une température de transition vitreuse élevée (supérieure à 200°C), est largement utilisé. Un exemple d'une telle utilisation est décrit dans US-A-5,434,226 **[1]**.

Ce polymère thermoplastique n'est toutefois pas susceptible d'être utilisé pour améliorer la ténacité des résines vinylesters pour la simple raison qu'il n'est pas miscible à elles.

Récemment, une étude réalisée par Wang et al. (Journal of Polymer Science, 38, 2409-2421, **[2]**) a mis en évidence la possibilité d'améliorer la ténacité d'une résine vinylester de type bisphénol A polymérisée à chaud par l'incorporation d'un copolymère thermoplastique à base de bisphénol A et de groupes sulfones et oxydes de phosphine, à savoir un poly(arylène éther diphénylsulfone/arylène éther triphénylphosphine).

Dans cette étude, ce copolymère est dissous dans la résine vinylester à 80°C puis, après addition d'un initiateur de réticulation au mélange résultant et dégazage de ce mélange, ce dernier est réticulé 1 heure à 100°C, puis 1 heure à 140°C.

Wang et *al.* montrent qu'une augmentation de la proportion en groupes oxydes de phosphine du copolymère se traduit par une augmentation de sa solubilité dans la résine vinylester et qu'une miscibilité est obtenue pour des teneurs en groupes oxydes de phosphine supérieures ou égales à 20%. Ils montrent, par ailleurs, que la présence de 5% en poids de copolymère dans la résine vinylester suffit à améliorer significativement la ténacité de cette résine et ce, indépendamment de la teneur en groupes oxydes de phosphine présentée par le copolymère.

Toutefois, ces Auteurs notent qu'il se produit le plus souvent une inversion de phase au cours de la réticulation des mélanges résine/copolymère en sorte que les matériaux obtenus sont constitués d'une phase thermoplastique continue dans laquelle sont dispersées des particules de résine vinylester.

Une telle inversion de phase n'est pas acceptable car elle se traduit par une dégradation des propriétés "spécifiques" de la résine vinylester, et notamment de ses propriétés thermiques et mécaniques.

Le problème se pose donc de parvenir à améliorer la ténacité des résines vinylesters sans altérer pour autant leurs autres propriétés, qui sont à l'origine de leur utilisation comme matrices dans des matériaux composites.

Or, les Inventeurs, poursuivant leurs études sur l'amélioration de la ténacité des résines "thermodurcissables" ont constaté que, de manière surprenante, il est possible, en soumettant des mélanges comprenant une résine vinylester et un copolymère thermoplastique du type de celui proposé par Wang et *al.*, à une polymérisation à froid, c'est-à-dire en l'absence de tout chauffage, d'obtenir des matériaux qui présentent une ténacité particulièrement élevée et qui conservent néanmoins les autres propriétés de la résine vinylester.

Les Inventeurs ont aussi constaté que cela est également vrai dans le cas de mélanges comprenant une résine époxyde, seule ou en association avec une résine vinylester, et un tel copolymère.

Ce sont ces constatations qui sont à la base de la présente invention.

## EXPOSÉ DE L'INVENTION

L'invention a donc, en premier lieu, pour objet un matériau comprenant au moins une résine polymérisée choisie parmi les résines vinylesters et les résines époxydes polymérisables à une température inférieure à 70°C et leurs mélanges, ainsi qu'un poly(arylène éther diphénylsulfone/arylène éther triphénylphosphine) présent dans cette résine sous la forme de particules, ledit matériau présentant une ténacité ($K_{IC}$) supérieure ou égale à 1,2 MPa.m$^{1/2}$ telle que déterminée selon la norme ISO 13586:2000.

Dans ce qui suit, le poly(arylène éther diphénylsulfone/arylène éther triphénylphosphine), qui répond à la formule (I) suivante :

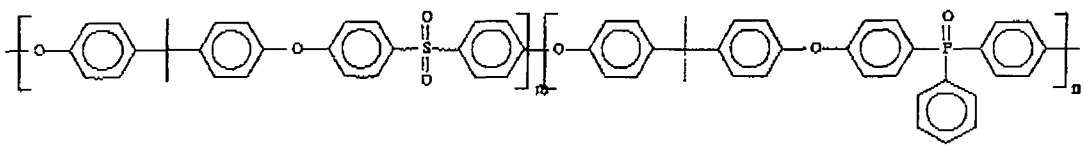

(I)

est noté BPA-Px, x représentant la teneur en groupes oxydes de phosphine par rapport à la totalité des groupes oxydes de phosphine et sulfones présents dans le copolymère, et étant donc déterminé par la formule :

$$x = \frac{n}{m+n} \times 100$$

La synthèse de ce copolymère a été décrite par McGrath et al. dans Polymer Engineering and Science, 37, 9, 1501-1511, 1997 **[3]**.

Dans ce cas, la résine est, de préférence, choisie parmi les résines vinylesters et les résines époxydes qui, outre d'être polymérisables à une température inférieure à 70°C, comportent des groupements hydroxyles libres, ainsi que parmi leurs mélanges. La présence de tels groupes s'avère, en effet, faciliter de manière notable la solubilisation du BPA-Px dans la résine et leur miscibilité est obtenue par l'établissement de ponts hydrogènes entre les fonctions oxydes de phosphine du thermoplastique et les groupes hydroxyles de ladite résine.

Dans le cadre de l'invention, on considère qu'une résine est polymérisable à une température inférieure à 70°C lorsqu'au moins 60%, et de préférence 80% ou plus, des fonctions réactives du ou des prépolymères ou monomères qui la constituent sont aptes à être convertis en présence d'un amorceur de polymérisation et/ou sous l'effet d'un traitement autre qu'un chauffage à 70°C ou plus, et ce, en un temps raisonnable, c'est-à-dire en pratique de moins de 24 heures, et de préférence de moins de 12 heures.

La résine, lorsqu'il s'agit d'une résine vinylester, peut être aussi bien une résine ne renfermant, comme composés polymérisables, que des prépolymères vinylesters, qu'une résine comprenant en outre un diluant réactif monomère comme le styrène ou le divinylbenzène.

On préfère, toutefois, utiliser une résine ne renfermant que des prépolymères vinylesters pour des raisons de simplicité de mise en oeuvre et de coûts, les diluants réactifs étant, en effet, généralement toxiques et volatils, ce qui impose le respect de nombreuses mesures de sécurité et, partant, le recours à des équipements coûteux.

Ceci étant précisé, la résine vinylester peut être choisie parmi les résines vinylesters de type bisphénol A, les résines vinylesters de type novolaque, les résines vinylesters "mixtes" - c'est-à-dire comprenant à la fois des motifs de type bisphénol A et des motifs novolaque - et les résines vinylesters halogénées.

A titre d'exemples de résines vinylesters susceptibles d'entrer dans la constitution de matériaux conformes à l'invention, on peut citer :

- la résine vinylester de type bisphénol A commercialisée par la société UCB sous la référence commerciale EB600 et dont les prépolymères répondent à la formule (II) suivante :

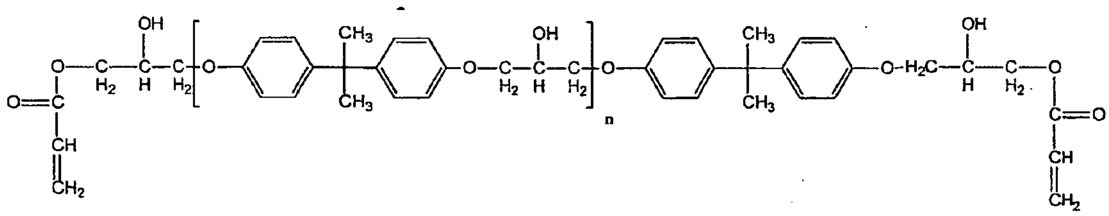

(II)

dans laquelle n est égal à 1 ou à 2 ;

- la résine vinylester de type novolaque commercialisée par la société UCB Chemicals sous la référence commerciale EB629, qui est diluée avec 30% de triméthylolpropane triacrylate (TMPTA) et 5% d'hydroxyéthane monoacrylate (HEMA), et dont les prépolymères répondent à la formule (III) suivante :

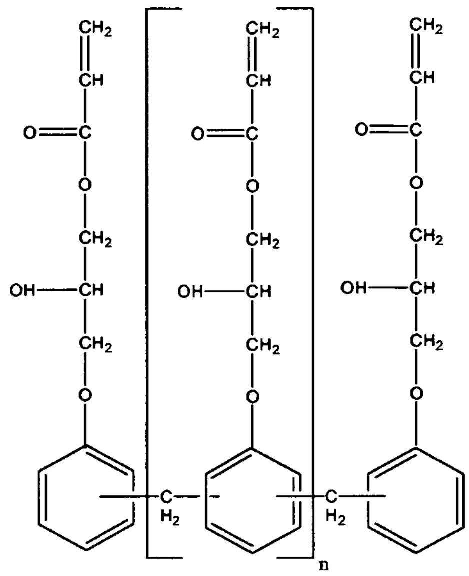

(III)

dans laquelle n est égal à 3 ;

- la résine vinylester "mixte" commercialisée par la société UCB Chemicals sous la référence commerciale EB620

et dont les prépolymères répondent à la formule (IV) suivante :

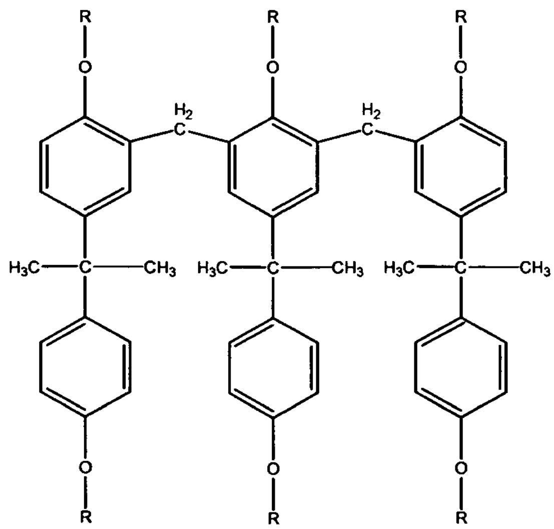

(IV)

avec R : 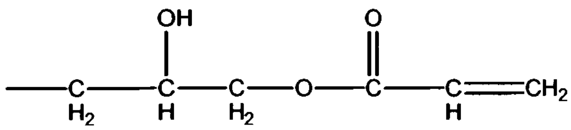

- la résine vinylester halogénée commercialisée par la société DOW Chemicals sous la référence commerciale DER 510A et dont les prépolymères répondent à la formule (V) suivante :

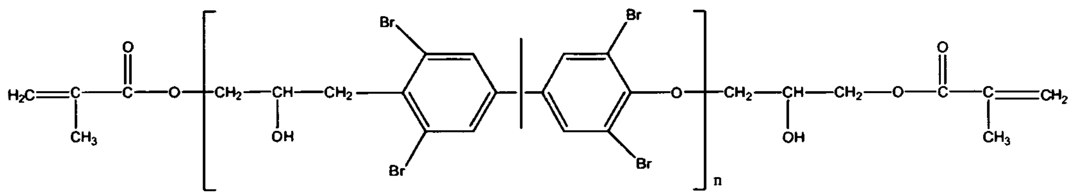

(V)

S'il s'agit d'une résine époxyde, alors celle-ci peut être choisie parmi les résines époxydes de type bisphénol A et les résines époxydes de type novolaque.

A titre d'exemples de résines époxydes susceptibles d'entrer dans la constitution de matériaux conformes à l'invention, on peut citer :

- les résines époxydes de type bisphénol A commercialisées par la société SHELL sous les références commerciales EPON 828, EPON 826 et EPON 825, ainsi que par la société DOW Chemicals sous les références commerciales DER 332, DER 331, DER 330, TACTIX 123 et TACTIX 128, et dont les prépolymères répondent à la formule (VI)

suivante :

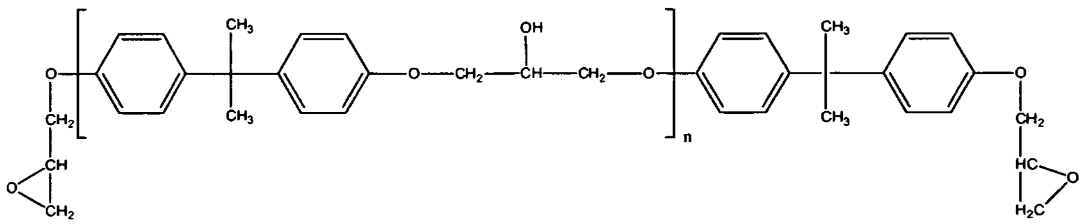

(VI)

dans laquelle n est un nombre entier allant de 0 à 12 ; et

- les résines époxydes de type novolaque commercialisées par la société SHELL sous les références commerciales EPON 862 et EPON 155, ainsi que par la société DOW Chemicals sous les références commerciales DER 354, DEN 431, DEN 438 et DEN 439, et dont les prépolymères répondent à la formule (VII) suivante :

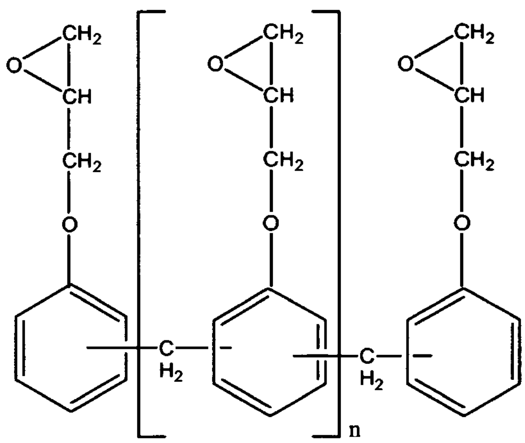

(VII)

dans laquelle n est un nombre entier allant de 0 à 5.

Conformément à l'invention, le matériau peut également comprendre un mélange d'une résine vinylester et d'une résine époxyde. Ce mélange peut être préparé à partir d'une résine vinylester et d'une résine époxyde synthétisées ou commercialisées séparément comme, par exemple, celles précédemment mentionnées, ou bien être un mélange prêt à l'emploi tel que celui commercialisé par la société UCB Chemicals sous la référence EB3605 et qui renferme les prépolymères de formules (VIIIa), (VIIIb) et (VIIIc) suivantes :

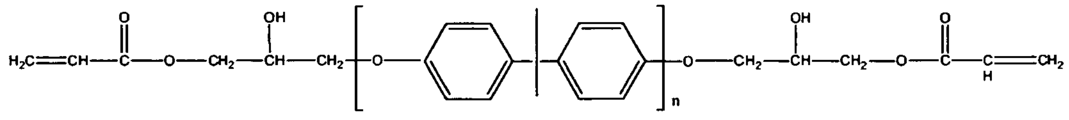

(VIIIa)

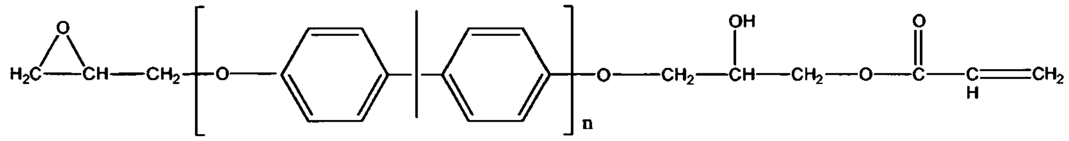

(VIIIb)

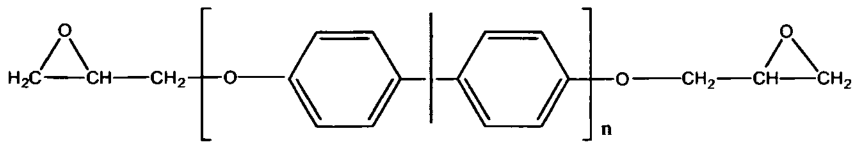

(VIIIc)

dans un rapport molaire résine vinylester/résine époxyde de 50/50.

Quelle que soit la résine utilisée, le BPA-Px présente, de préférence, un rapport molaire des groupes oxydes de phosphine aux groupes sulfones au moins égal à 20/80 et ne dépassant pas 40/60. En d'autres termes, on utilise de, préférence, des BPA-Px présentant une teneur en groupes oxydes de phosphine au moins égale à 20% et ne dépassant pas 40% par rapport à la totalité des groupes oxydes de phosphine et sulfones présents dans ces copolymères. Les Inventeurs ont, en effet, pu vérifier qu'une teneur en groupes oxydes de phosphine inférieure à 20% se traduit par de plus grandes difficultés à obtenir une solubilisation du BPA-Px dans la résine et leur miscibilité, tandis qu'une teneur supérieure à 40% conduit à des systèmes parfaitement miscibles à température ambiante, ce qui n'est pas intéressant du point de vue de l'amélioration de la ténacité.

De manière particulièrement préférée, le rapport molaire des groupes oxydes de phosphine aux groupes sulfones va de 20/80 à 30/70.

Selon une autre disposition préférée du matériau conforme à l'invention, la résine et le BPA-Px sont présents dans ce matériau dans un rapport massique allant de 95/5 à 80/20, de préférence, de 95/5 à 85/15 et, mieux encore, de 90/10 à 85/15.

Le matériau conforme à l'invention peut comprendre, outre la résine et le BPA-Px, d'autres adjuvants qui seront choisis selon l'usage auquel il est destiné et des propriétés particulières que l'on veut lui conférer en fonction de cet usage. Ces adjuvants peuvent notamment être des polymères plastiques, durcissables ou élastomères, de préférence de faibles poids moléculaires, propres à améliorer certaines propriétés des résines vinylesters et époxydes comme, par exemple, des acrylates, mais également des charges, notamment minérales, des flexibilisants, des plastifiants, des agents thixotropes, des agents ignifugeants, des agents anti-UV, des agents de mouillage, des agents anti-retraits, des colorants, ..., tous ces adjuvants et leur utilisation pour la fabrication de matériaux à base de résines vinylesters et/ou époxydes étant bien connus de l'homme du métier.

De préférence, le matériau a une ténacité supérieure ou égale à 1,3 MPa.$m^{1/2}$, de préférence, supérieure ou égale à 1,4 MPa.$m^{1/2}$ et, mieux encore, supérieure ou égale à 1,5 MPa.$m^{1/2}$.

Ses propriétés thermiques comme sa température de transition vitreuse, et ses autres propriétés mécaniques comme le module d'élasticité ou la contrainte à la rupture sont, toutefois, comparables à celles de la résine qu'il renferme. Il est donc particulièrement bien adapté à servir de matrice dans des matériaux composites.

L'invention a, aussi, pour objet un procédé de fabrication d'un matériau tel que précédemment défini, lequel procédé comprend les étapes suivantes :

a) dissoudre le BPA-Px dans la résine pour obtenir un mélange homogène ;
b) couler le mélange dans un moule approprié et le dégazer ;
c) placer le mélange dans des conditions propres à obtenir sa démixtion ; et
d) polymériser le mélange à froid.

Par polymérisation à froid, on entend toute polymérisation qui est réalisée en l'absence de chauffage, et en particulier une polymérisation induite par un rayonnement comme une ionisation par faisceau d'électrons, une irradiation ultraviolette (conjointement avec l'action d'un photo-initiateur), une irradiation infrarouge ou des rayons X, ce rayonnement étant choisi en fonction du matériau devant être fabriqué.

En effet, la polymérisation par ionisation par faisceau d'électrons présente l'avantage d'être la plus rapide, mais elle ne peut être utilisée que pour la fabrication de matériaux de faible épaisseur (c'est-à-dire en pratique de quelques cm d'épaisseur). La polymérisation induite par irradiation UV est également très rapide, mais elle est réservée à la fabrication de matériaux transparents, tandis que la polymérisation induite par rayons X est plus lente mais elle permet de polymériser des matériaux de plusieurs dizaines de cm d'épaisseur.

En variante, la polymérisation peut également être réalisée sans utiliser de rayonnement, auquel cas il convient d'ajouter à la résine, juste avant la polymérisation, un amorceur de polymérisation comme un peroxyde organique (peroxyde de méthyléthylcétone, peroxyde de cyclohexanone, ...) dans le cas d'une résine vinylester, une amine ou un anhydride d'acide dans le cas d'une résine époxyde.

A l'étape a), le BPA-Px est dissous dans la résine préalablement portée à une température de l'ordre de 60 à 90°C, éventuellement en présence d'un solvant non réactif comme, par exemple, le tétrahydrofurane, auquel cas ce solvant est éliminé secondairement du mélange.

Par ailleurs, à l'étape c), la démixtion du mélange peut être obtenue en le plaçant à température ambiante ou en le soumettant à un chauffage doux, c'est-à-dire à une température ne dépassant pas 70°C, jusqu'à ce que la séparation du mélange en deux phases n'évolue plus.

L'invention a, encore, pour objet, un matériau composite comprenant une matrice et un renfort dans cette matrice, dans lequel ladite matrice est constituée d'un matériau tel que précédemment défini.

Conformément à l'invention, le renfort peut être de différents types. Ainsi, il peut s'agir d'un renfort constitué de fibres de verre, de fibres de carbone, de fibres métalliques comme des fibres d'acier, des fibres d'aluminium ou des fibres de bore, de fibres organiques comme les fibres aramides, les fibres de polyéthylène, les fibres de polyester ou les fibres de polybenzoxazole (BPO), ou encore de fibres de carbure de silicium, ce renfort pouvant se présenter, selon la nature des fibres qui le constituent, sous la forme de fils coupés, de fibres broyées, de mats à filaments continus, de mats à filaments coupés, de stratifils (ou "rovings" en langue anglaise), de tissus, de tricots, de feutres, ..., ou encore sous la forme de complexes réalisés par association de différents types de renforts plans.

De préférence, selon l'invention, le renfort est choisi parmi les fibres de verre, les fibres de carbone, les fibres aramides, les fibres de polybenzoxazole et les fibres de bore.

L'incorporation du renfort dans la matrice peut être réalisée par toutes les techniques connues de renforcement des matrices vinylesters et époxydes. Sur ce point, le lecteur pourra, par exemple, se référer aux "TECHNIQUES DE L'INGENIEUR", Plastiques et Composites, volume AM5.

La présente Invention a, enfin, pour objet l'utilisation d'un matériau composite tel que précédemment défini pour la fabrication de pièces dans l'industrie aéronautique ou aérospatiale.

D'autres caractéristiques de l'invention apparaîtront mieux à la lecture du complément de description qui suit, qui se rapporte à un exemple de réalisation de matériaux conformes à l'invention et de démonstration de leurs propriétés, et en référence aux dessins annexés.

Il va de soi que ce complément de description est donné à titre illustratif et non limitatif de l'objet de l'invention.

## BREVE DESCRIPTION DES DESSINS

La figure 1 illustre schématiquement une éprouvette, vue de dessus (partie A) et vue de côté (partie B), telle qu'utilisée dans les tests de ténacité réalisés sur des matériaux conformes à l'invention conformément à la norme ISO 13586:2000.

La figure 2 illustre schématiquement le montage, vu de dessus (partie A) et vu en coupe transversale (partie B), tel qu'utilisé sur une machine d'essai INSTRON 4400R dans les tests de ténacité réalisés sur des matériaux conformes à l'invention conformément à la norme ISO 13586:2000.

## EXPOSÉ DÉTAILLÉ DE MODES DE RÉALISATION PARTICULIERS

L'exemple qui suit illustre la réalisation de matériaux conformes à l'invention à partir :

- de la résine vinylester de type bisphénol A référencée EB600 de la société UCB et dont les prépolymères répondent à la formule (II) précédemment indiquée ; et
- de copolymères statistiques poly(arylène éther diphénylsulfone/arylène éther triphénylphosphine) synthétisés par les Inventeurs. Cette synthèse, qui est décrite ci-après, a été réalisée en vue d'obtenir des copolymères BPA-Px dans lesquels x est égal à 20, à 30 ou à 70 (c'est-à-dire des copolymères présentant a priori un rapport molaire des groupes oxydes de phosphine aux groupes sulfones respectivement égal à 20/80, 30/70 et à 70/30). Dans ce qui suit, ces copolymères sont donc dénommés respectivement BPA-P20, BPA-P30 et BPA-P70.

### a) Synthèse des copolymères BPA-P20, BPA-P30 et BPA-P70 :

Deux copolymères BPA-P20, deux copolymères BPA-P30 et un copolymère BPA-P70 sont synthétisés par substitution nucléophile aromatique entre les fonctions hydroxyles d'un bisphénol A (Bis A, Sigma Aldrich) et les fonctions halogénées de l'oxyde de bis(4-fluorophényl)phénylphosphine (BFPPO, Sigma Aldrich) et de la 4-chlorophénylsulfone (DCDPS, Sigma Aldrich), dans un solvant constitué d'un mélange diméthylacétamide (DMAc)/toluène 70/30 et en présence de carbonate de calcium ($K_2CO_3$) comme décrit dans le document **[3].**

En pratique, le bisphénol A, le BFPPO et le DCDPS sont placés dans un ballon tricol, dans des rapports molaires convenablement choisis en fonction du rapport molaire des groupes oxydes de phosphine aux groupes sulfones devant être présenté par le BPA-Px, conjointement avec du $K_2CO_3$ en excès à 15% molaire. Le mélange DMAc/toluène (préparé après un séchage du toluène sur $CaH_2$, suivi d'une distillation) est alors ajouté et l'ensemble est placé sous courant d'azote pour éliminer toute trace d'oxygène, ce dernier pouvant, en effet, être responsable de réactions indésirables de type radicalaire.

Le milieu réactionnel est placé à 140-145°C, toujours sous courant d'azote, pour distiller le toluène et ce, le temps nécessaire pour éliminer totalement le toluène du milieu réactionnel, soit environ 8 heures. Puis, le milieu réactionnel est laissé à 160°C pendant 16 heures afin d'obtenir un BPA de masse molaire la plus élevée possible. Le temps total de réaction est de 24 heures.

Le milieu réactionnel, qui à chaud est rose foncé avec un précipité blanc et visqueux collé à la paroi du tricol et qui devient progressivement jaune en refroidissant, est ramené à température ambiante, dilué par du dichlorométhane, filtré et acidifié avec de l'acide acétique pour protonner les groupes phénols terminaux. Le BPA-Px est précipité dans du méthanol, redissous dans du dichlorométhane, reprécipité dans du méthanol, filtré et séché sous vide à 150°C pendant 24 heures.

De façon plus précise, les copolymères BPA-P20 sont synthétisés en utilisant :

Cop. 1 BPA-P20 :

- Bis A : 9,1563 g (0,0401 mol)
- DCDPS : <9,3 g (<0,00324 mol)
- BFPPO : 2,5109 g (0,0079 mol)
- DMAc : 278 ml, toluène : 115 ml

Cop. 2 BPA-P20 :

- Bis A : 9,1532 g (0,0400 mol)
- DCDPS : 9,1914 g (0,0320 mol)
- BFPPO : 2,5341 g (0,0080 mol)
- DMAc : 280 ml, toluène : 121 ml.

Les copolymères BPA-P30 sont synthétisés en utilisant :

Cop. 1 BPA-P30 :

- Bis A : 9,1400 g (0,0400 mol)
- DCDPS : 8,0495 g (0,0280 mol)
- BFPPO : 3,7794 g (0,0120 mol)
- DMAc : 280 ml, toluène : 119 ml.

Cop. 2 BPA-P30 :

- Bis A : 9,1344 g (0,0400 mol)
- DCDPS : 8,0585 g (0,0280 mol)
- BFPPO : 3,7794 g (0,0120 mol)
- DMAc : 280 ml, toluène : 119 ml.

Le copolymère BPA-P70 est, lui, synthétisé en utilisant :

- Bis A : 9,1284 g (0,0399 mol)
- DCDPS : 3,4476 g (0,0120 mol)
- BFPPO : 8,7995 g (0,0279 mol)
- DMAc : 282 ml, toluène : 120 ml.

Pour chaque copolymère ainsi synthétisé, on détermine :

- sa masse molaire Mn et son indice de polydispersité I par chromatographie d'exclusion stérique dans du tétrahydrofurane (THF) avec un chromatographe VARIAN 5500 à double détection (réfractomètre différentiel et spectromètre UV à 254 nm) muni d'une colonne "High Speed" PSS, à un débit de 1 ml/min et en utilisant un étalonnage au polystyrène.
- le rapport molaire $R_{(P/S)}$ des groupes oxydes de phosphine aux groupes sulfones qu'il présente réellement, par résonance magnétique nucléaire à 200 MHz dans du $CDCl_3$ avec un appareil BRUKER AC200 ; et
- sa température de transition vitreuse Tg par analyse calorimétrique différentielle avec un appareil DSC7 de PERKIN ELMER Instruments, à une vitesse de 10°C/min dans une gamme de températures de 100 à 250°C.

Les valeurs obtenues sont présentées dans le tableau 1 ci-après.

TABLEAU 1

| **Copolymères** | $R_{(P/S)}$ | **Mn** (g/mol) | **I** | **Tg** (°C) |
|---|---|---|---|---|
| **Cop. 1 BPA-P20** | 22/78 | 15000 | 2 | 192 |
| **Cop. 2 BPA-P20** | 22/78 | 23000 | 2 | 195 |
| **Cop. 1 BPA-P30** | 31/69 | 20000 | 2,3 | 198 |
| **Cop. 2 BPA-P30** | 31/69 | 30000 | 2 | 197 |
| **Cop. BPA-P70** | 54/46 | 3000 | 2,6 | 204 |

**b) Préparation des mélanges résine EB600/BPA-Px :**

Six mélanges différents, ci-après dénommés mélanges 1 à 6, constitués de résine EB600 et de l'un des copolymères BPA-Px synthétisés au point a), sont préparés en dissolvant chaque BPA-Px dans 200 à 300 ml de THF, puis en ajoutant progressivement la solution obtenue à 120 g de résine EB600 placée à 80°C, sous vive agitation. La température des mélanges est augmentée à 110°C et les mélanges sont laissés sous agitation plusieurs heures jusqu'à complète évaporation du solvant. Ils sont ensuite placés dans une étuve sous vide pour éliminer les éventuelles traces de solvant.

Le tableau 2 ci-après précise, pour chacun des mélanges 1 à 6, le copolymère BPA-Px qu'il renferme et le rapport massique de la résine EB600 à ce copolymère.

TABLEAU 2

| **Mélanges** | **Copolymères** | **EB600/BPA-Px (m/m)** |
|---|---|---|
| **1** | Cop. 1 BPA-P20 | 95/5 |

(suite)

| Mélanges | Copolymères | EB600/BPA-Px (m/m) |
|---|---|---|
| **2** | Cop. 1 BPA-P20 | 90/10 |
| **3** | Cop. 2 BPA-P20 | 85/15 |
| **4** | Cop. 1 BPA-P30 | 90/10 |
| **5** | Cop. 2 BPA-P30 | 86/14 |
| **6** | Cop. BPA-P70 | 90/10 |

**c) Démixtion des mélanges résine/BPA-Px :**

Les mélanges 1 à 6 sont coulés dans des moules, dégazés et sont conservés à température ambiante pendant des périodes de temps allant de 3 à 8 jours pour laisser la démixtion se faire.

**d) Polymérisation des mélanges résine/BPA-Px :**

Les mélanges sont polymérisés par ionisation sous faisceau d'électrons à des doses de 100 kGy par passages successifs de 25 kGy.

**e) Propriétés des matériaux obtenus :**

Les matériaux résultant de la polymérisation des mélanges résine EB600/BPA-Px sont soumis à des tests visant à déterminer leur température de transition vitreuse Tg, leurs module d'élasticité, leur contrainte à la rupture et leur ténacité $K_{IC}$.

Température de transition vitreuse :

La température de transition vitreuse est déterminée par des analyses mécaniques dynamiques (DMA) au moyen d'un appareil DMA7 de PERKIN ELMER Instruments, cette technique présentant, en effet, l'avantage de ne soumettre les matériaux analysés qu'à de très faibles déformations et, partant, de ne pas en modifier la structure.

Les mesures sont faites en flexion trois points, à 1 Hz.

Le dispositif d'essai est constitué de deux appuis triangulaires externes distants de 15 mm, leur longueur étant d'au moins 10 mm. Le poinçon d'un diamètre de 2 mm est centré par rapport aux appuis externes. La température de transition vitreuse est déterminée à partir de la courbe donnant le facteur d'amortissement (tan $\delta$) en fonction de la température. Le programme en température est de 10°C/min pour un balayage en température de 0 à 300°C.

Module d'élasticité et contrainte à la rupture :

Le module d'élasticité et la contrainte à la rupture des matériaux sont déterminés au cours de tests de rupture en flexion trois points.

Ces tests sont effectués à l'aide d'une machine d'essai INSTRON 4400R équipée d'une cellule de force de 10 kN, d'une console de pilotage INSTRON 8500 et d'un système informatique de traitement des données (logiciel INSTRON série IX).

Le dispositif d'essai est constitué d'un tas en acier supportant les deux appuis externes distants de 35 mm. Le diamètre des appuis est de 10 mm, leur longueur étant d'au moins 15 mm. Le poinçon d'un diamètre de 25 mm est centré par rapport aux appuis externes. La force est appliquée dans le plan de symétrie des éprouvettes et du montage d'essai.

L'essai consiste à mesurer la force nécessaire pour rompre une éprouvette de forme parallélépipédique ($50\times10\times2$ $mm^3$). Il est mené à vitesse constante de déplacement de la traverse (2 mm/min). La force et la flèche sont mesurées et enregistrées en même temps. On évalue, à partir de la courbe contrainte/déformation obtenue, la contrainte à la rupture et le module de flexion et la déformation à la rupture.

Ténacité :

Le facteur d'intensité de contrainte critique ou ténacité d'un matériau est noté $K_{Ic}$. Sa mesure est basée sur

l'analyse du champ de contrainte autour de la fissure.

Dans le cas présent, cette ténacité est mesurée par des tests réalisés conformément à la norme ISO 13586: 2000 qui fixe les modalités des essais de ténacité des matériaux plastiques suivant le mode d'ouverture de la fissure (mode I).

Cette norme prévoyant deux types d'essais, à savoir des essais de flexion trois points et des essais de traction sur éprouvettes compactes, les tests de ténacité sont réalisés par des essais de flexion trois points en raison d'une plus grande facilité d'usinage des éprouvettes.

Les éprouvettes soumises aux essais de flexion trois points ou éprouvettes de flexion à entaille latérale (SENB pour "single edge notch bending" en langue anglaise) sont préparées conformément à la figure 1 qui représente schématiquement une éprouvette vue de dessus (partie A) et vue de côté (partie B). Dans cette figure :

- *w* représente la largeur de l'éprouvette,
- *l* représente sa longueur hors tout,
- *h* représente son épaisseur, tandis que
- *a* représente la longueur de la fissure (entaille + préfissure).

Conformément à la norme ISO 13586:2000 :

- *l* doit être supérieur à 4,2*w*,
- *h* doit être inférieur à *w*/2 tout en étant supérieur à *w*/4, et
- *a* doit être inférieur ou égal à 0,55*w* tout en étant supérieur ou égal à 0,45*w*.

Dans le cadre des présents tests, on choisit $a$ = 5 mm + ε où ε est la longueur de la préfissure, $h$ = 5 mm, $w$ = 10 mm et $l$ = 56 mm.

La méthode suppose un comportement linéaire élastique des matériaux avec déformation plane à la pointe de la fissure. Il faut donc que la fissure soit suffisamment aiguë pour que les valeurs qu'elle permet d'obtenir pour les propriétés mesurées ne soient pas sensiblement plus élevées que celles qu'on obtiendrait avec une fissure encore plus aiguë.

La préfissure est réalisée à l'aide d'un appareil INSTRON 4466 équipé d'une cellule de force de 500 N, d'une console de pilotage INSTRON 8500 et d'un système informatique de traitement des données (logiciel INSTRON série IX). Une lame de rasoir est fixée par un mors à l'extrémité supérieure alors qu'un plateau est placé en dessous. L'éprouvette entaillée est alignée grâce au positionnement de la lame dans l'entaille. La lame est enfoncée à une vitesse de 0,2 ou 0,5 mm/min jusqu'à une profondeur de 0,15 à 0,4 mm maximum. Les conditions de déplacement de la lame de rasoir sont préalablement définies. Selon la norme, l'augmentation de la longueur de la fissure ainsi obtenue doit être supérieure à 4 fois le rayon original de la pointe de l'entaille.

L'essai est effectué sur une machine d'essai INSTRON 4400R équipée d'une cellule de force de 10kN, d'une console de pilotage INSTRON 8500 et d'un système informatique de traitement des données (logiciel INSTRON série IX).

La figure 2 illustre schématiquement le montage comportant deux rouleaux et un capteur de déplacement tel qu'utilisé sur la machine d'essai INSTRON 4400R, vu de dessus (partie A) et vu en coupe transversale (partie B).

Dans cette figure :

- *L* représente la portée,
- *R* représente le rayon,
- *h* représente l'épaisseur, tandis que
- *l* représente la distance contrôlée par le capteur de déplacement.

$L$ doit être égal à $4w \pm 0{,}1w$, tandis que $R$ doit être inférieur à $w/2$ et supérieur à $w/8$.

Dans le cadre des présents tests, la portée est de 40 mm et le rayon des rouleaux est de 5 mm.

Le facteur d'intensité de contrainte critique $K_{IC}$ (noté $K_Q$ pour l'instant) est calculé par la formule suivante :

$$K_Q = \frac{f(a/w) \times F_Q}{h \times \sqrt{w}}$$

dans laquelle :

- $F_Q$ est la charge au début de la propagation de la fissure (charge maximum mesurée sur la courbe donnant la

charge en fonction du déplacement),

- *h* est l'épaisseur de l'éprouvette,
- *w* est la largeur de l'éprouvette,
- *f*(*a*/*w*) est le facteur d'étalonnage lié à la géométrie, fonction de la longueur a de la fissure.

$$f(x) = 6 \times x \times \frac{1,99-x(1-x)(2,15-3,93x+2,7x^2)}{(1+2x)(1-x)^{3/2}} \quad \text{avec } x = a/w$$

Les résultats d'essai ne doivent être considérés comme valables que si les dimensions des éprouvettes sont nettement plus grandes que la zone plastique entourant la pointe de la fissure, caractérisée par la valeur $\bar{r}$ définie par la formule :

$$\bar{r} = \frac{K_Q^2}{\sigma_Y^2}$$

dans laquelle $\sigma y$ est la contrainte au seuil d'écoulement en traction uniaxiale ou 0,7 fois la contrainte au seuil d'écoulement en compression.

Pour être considérées comme étant appropriées aux essais de rupture par déformation plane, les éprouvettes doivent satisfaire aux trois critères dimensionnels suivants :

- $h > 2,5\,\bar{r}$
- $a > 2,5\,\bar{r}$
- $(w\text{-}a) > 2,5\,\bar{r}$.

Etant donné les dimensions d'éprouvette proposées dans la norme, il suffit que l'un des critères ci-dessus soit satisfait pour que tous les autres le soient.

Si les différents critères sont satisfaits, alors $K_Q$ est égal à $K_{Ic}$.

Le tableau 3 ci-après présente les valeurs de température de transition vitreuse Tg, de module d'élasticité, de contrainte à la rupture et de facteur d'intensité de contrainte critique $K_{Ic}$ telles qu'obtenues par les tests décrits ci-avant pour des matériaux résultant de la polymérisation des mélanges 1 à 6, après 8 jours de démixtion pour les mélanges 1 à 3 et 3 jours de démixtion pour les mélanges 4 à 6, ainsi que celles obtenues, dans les mêmes conditions, pour un matériau uniquement constitué de résine EB600. Chaque valeur présentée dans le tableau 3 correspond à la moyenne des valeurs obtenues pour 5 à 10 mesures effectuées sur des éprouvettes différentes d'un même matériau.

En outre, il présente les gains en ténacité ($\Delta K_{Ic}$), exprimés en pourcentages, présentés par les matériaux résultant de la polymérisation desdits mélanges 1 à 6 par rapport à la ténacité de la résine EB600 seule.

TABLEAU 3

| **Matériaux** | **Démixtion** (jours) | **Tg (°C)** | **Module élasticité** (MPa) | **Contrainte rupture** (MPa) | $K_{Ic}$ (MPa.m$^{1/2}$) | $\Delta K_c$ |
|---|---|---|---|---|---|---|
| **Mélange 1** | 8 | 124,8 | 3775 | 118 | 1,28 ± 0,06 | +60% |
| **Mélange 2** | 8 | 119,2 | 3850 | 120 | 1,37 ± 0,07 | +71% |
| **Mélange 3** | 8 | 125,5 | 3709 | 123 | 1,46 ± 0,08 | +82% |
| **Mélange 4** | 3 | 129,2 | 3695 | 114 | 1,40 ± 0,07 | +75% |
| **Mélange 5** | 3 | 123,7 | 3747 | 141 | 1,51 ± 0,07 | +88% |
| **Mélange 6** | 3 | 124 | 3858 | 110 | 1,31 ± 0,08 | +64% |
| **Résine EB600** | --- | 114 | 3572 | 131 | 0,8 | --- |

Le tableau 3 montre que les matériaux conformes à l'invention ont tous une ténacité supérieure à 1,2 MPa.m$^{1/2}$.

Pour cinq d'entre eux, elle est supérieure à 1,3 MPa.m$^{1/2}$ et, pour l'un d'entre eux, elle est même supérieure à 1,5 MPa.m$^{1/2}$.

Le gain en ténacité est donc d'au moins 60% et peut atteindre 88% par rapport à la résine vinylester à partir desquels ils ont été préparés.

Il montre également que les matériaux conformes à l'invention présentent une température de transition vitreuse, un module d'élasticité et une contrainte à la rupture comparables à celles de la résine vinylester.

**BIBLIOGRAPHIE**

**[1]** US-A-5,434,226

**[2]** Wang et al., Journal of Polymer Science, 38, 2409-2421

**[3]** McGrath et al., Polymer Engineering and Science, 37, 9, 1501-1511, 1997


**Revendications**

1. Matériau comprenant au moins une résine polymérisée choisie parmi les résines vinylesters et les résines époxydes polymérisables à une température inférieure à 70°C et leurs mélanges, ainsi qu'un copolymère poly(arylène éther diphénylsulfone/arylène éther triphénylphosphine) de formule (I) ci-après :

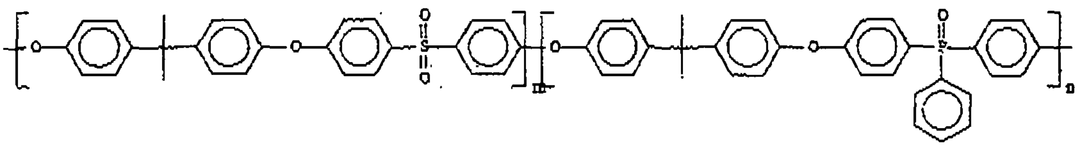

(I)

noté BPA-Px, x représentant la teneur en groupes oxydes de phosphine par rapport à la totalité des groupes oxydes de phosphine et sulfones présents dans ledit copolymère et étant déterminé par la formule :

$$x = \frac{n}{m+n} \times 100 \;;$$

ledit BPA-Px étant présent dans cette résine sous la forme de particules et ledit matériau présentant une ténacité ($K_{Ic}$) supérieure ou égale à 1,2 MPa.m$^{1/2}$ telle que déterminée selon la norme ISO 13586:2000.

2. Matériau selon la revendication 1, dans lequel la résine est choisie parmi les résines vinylesters et les résines époxydes qui comportent des groupements hydroxyles libres, ainsi que leurs mélanges.

3. Matériau selon la revendication 1 ou la revendication 2, dans lequel la résine est une résine vinylester ne contenant que des prépolymères vinylesters comme composés polymérisables.

4. Matériau selon l'une quelconque des revendications précédentes, dans lequel la résine est choisie parmi les résines vinylesters de type bisphénol A, les résines vinylesters de type novolaque, les résines vinylesters comprenant à la fois des motifs de type bisphénol A et des motifs novolaque, et les résines vinylesters halogénées.

5. Matériau selon l'une quelconque des revendications précédentes, dans lequel la résine est une résine vinylester choisie parmi les résines dont les prépolymères répondent à l'une des formules (II), (III), (IV) et (V) suivantes :

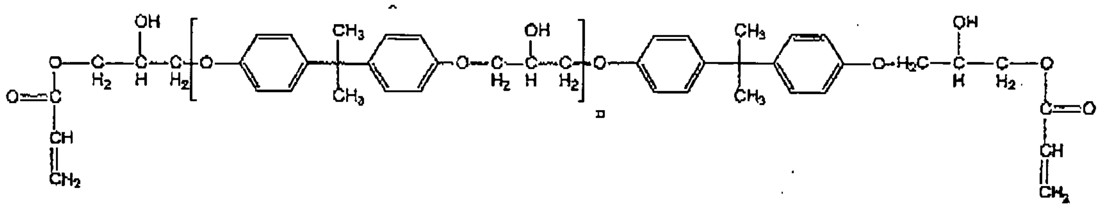

(II)

dans laquelle n est égal à 1 ou 2 ;

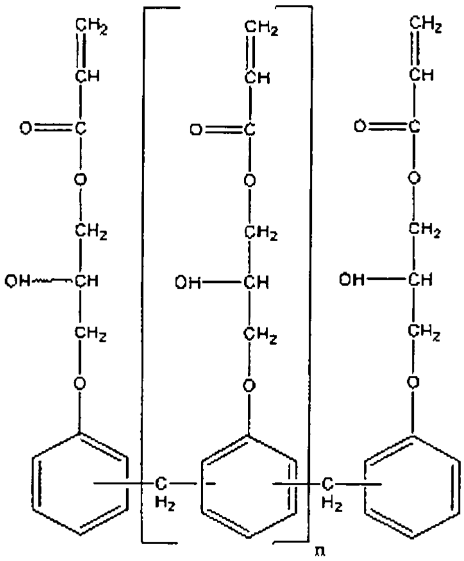

(III)

dans laquelle n est égal à 3 ;

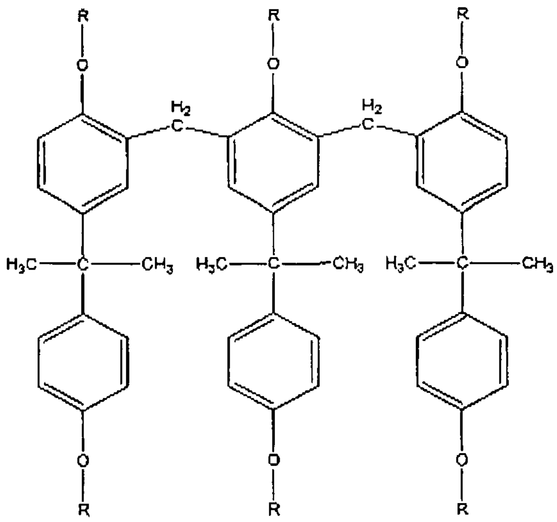

(IV)

avec R :

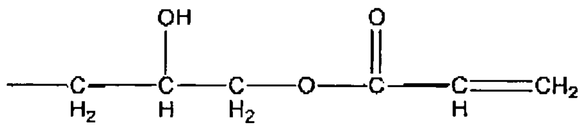

et

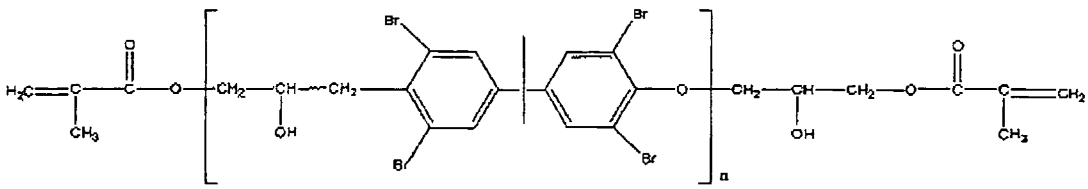

(V)

**6.** Matériau selon l'une quelconque des revendications 1 à 4, dans lequel la résine est une résine époxyde choisie parmi les résines époxydes dont les prépolymères répondent à l'une des formules (VI) et (VII) suivantes :

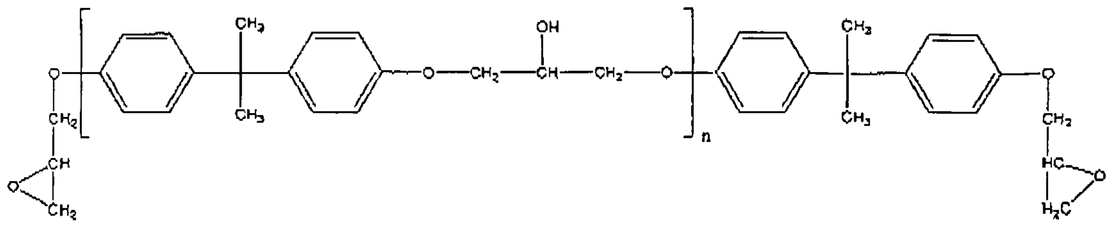

(VI)

dans laquelle n est un nombre entier allant de 0 à 12 ; et

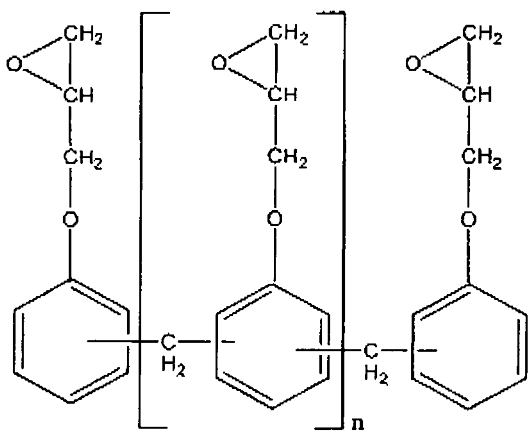

(VII)

dans laquelle n est un nombre entier allant de 0 à 5.

**7.** Matériau selon l'une quelconque des revendications 1 à 4, dans lequel la résine est un mélange d'une résine vinylester et d'une résine époxyde comprenant les prépolymères de formules (VIIIa), (VIIIb) et (VIIIc) suivantes :

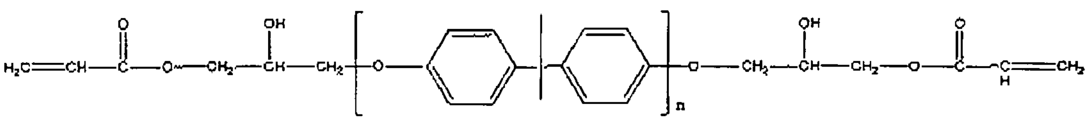

(VIIIa)

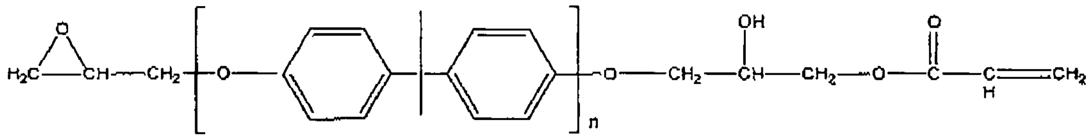

(VIIIb)

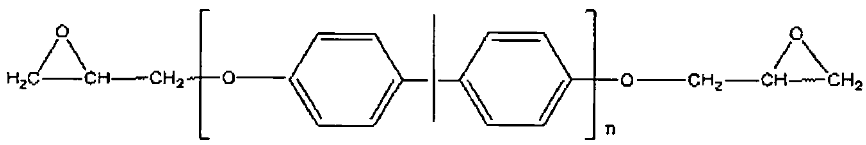

(VIIIc)

dans un rapport molaire résine vinylester/résine époxyde de 50/50.

**8.** Matériau selon l'une quelconque des revendications 1 à 7, dans lequel le BPA-Px présente un rapport molaire des groupes oxydes de phosphine aux groupes sulfones au moins égal à 20/80 et ne dépassant pas 40/60.

**9.** Matériau selon l'une quelconque des revendications 1 à 7, dans lequel le BPA-Px présente un rapport molaire des groupes oxydes de phosphine aux groupes sulfones allant de 20 à 30.

**10.** Matériau selon l'une quelconque des revendications précédentes, dans lequel la résine et le BPA-Px sont présents dans le matériau dans un rapport massique allant de 95/5 à 80/20 et, de préférence, de 95/5 à 85/15.

**11.** Matériau selon l'une quelconque des revendications précédentes, dans lequel la résine et le BPA-Px sont présents dans le matériau dans un rapport massique allant de 90/10 à 85/15.

**12.** Matériau selon l'une quelconque des revendications précédentes, qui comprend de plus un ou plusieurs adjuvants choisis parmi les polymères plastiques, durcissables et élastomères, les charges, les flexibilisants, les plastifiants les agents thixotropes, les agents ignifugeants, les agents anti-UV, les agents de mouillage, les agents anti-retraits et les colorants.

**13.** Matériau selon l'une quelconque des revendications précédentes, qui présente une ténacité supérieure ou égale à 1,3 $MPa.m^{1/2}$ et, de préférence, supérieure ou égale à 1,4 $MPa.m^{1/2}$.

**14.** Matériau selon l'une quelconque des revendications précédentes, présentant une ténacité supérieure ou égale à 1,5 $MPa.m^{1/2}$.

**15.** Procédé de fabrication d'un matériau selon l'une quelconque des revendications 1 à 14, qui comprend les étapes suivantes :

a) dissoudre le BPA-Px dans la résine pour obtenir un mélange homogène ;
b) couler le mélange dans un moule approprié et le dégazer ;
c) placer le mélange dans des conditions propres à obtenir sa démixtion ; et
d) polymériser le mélange à froid.

**16.** Procédé selon la revendication 15, dans lequel, à l'étape d), la polymérisation est induite par ionisation par faisceau

d'électrons, irradiation ultraviolette, irradiation infrarouge ou par rayons X.

**17.** Procédé selon la revendication 15 ou la revendication 16, dans lequel, à l'étape a), le BPA-Px est dissous dans la résine préalablement portée à une température de l'ordre de 60 à 90°C, éventuellement en présence d'un solvant non réactif.

**18.** Procédé selon l'une quelconque des revendications 15 à 17, dans lequel, à l'étape c), le mélange est placé à température ambiante ou est soumis à un chauffage à une température ne dépassant pas 70°C.

**19.** Matériau composite comprenant une matrice et un renfort dans cette matrice, dans lequel ladite matrice est constituée d'un matériau tel que défini dans l'une quelconque des revendications 1 à 14.

**20.** Matériau composite selon la revendication 19, dans lequel le renfort est choisi parmi les fibres de verre, les fibres de carbone, les fibres métalliques, les fibres organiques et les fibres de carbure de silicium.

**21.** Matériau composite selon la revendication 20, dans lequel le renfort est choisi parmi les fibres de verre, les fibres de carbone, les fibres aramides, les fibres de polybenzoxazole et les fibres de bore.

**22.** Utilisation d'un matériau composite selon l'une quelconque des revendications 19 à 21, pour la fabrication de pièces dans l'industrie aéronautique ou aérospatiale.

## Claims

**1.** Material comprising at least one polymerized resin chosen from among vinyl ester resins and epoxide resins which can be polymerized at a temperature of less than 70°C and their blends, as well as a poly(arylene ether diphenyl sulphone/arylene ether triphenyl phosphine) copolymer of the following formula (I):

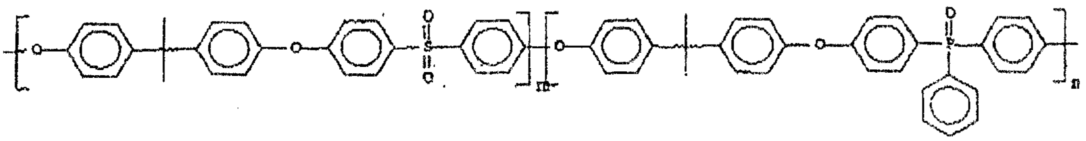

(I)

designated BPA-Px, x representing the content of phosphine oxide groups relative to the totality of the sulphone and phosphine oxide groups present in said copolymer and being determined by the formula:

$$x = \frac{n}{m+n} \times 100$$

in which BPA-Px is present in said resin in the form of particles and said material has a toughness ($K_{IC}$) equal to or greater than 1.2 MPa.$m^{1/2}$, determined according to ISO standard 13586:2000.

**2.** Material according to claim 1, in which the resin is chosen from vinyl ester resins and epoxide resins which comprise free hydroxyl groups, and their blends.

**3.** Material according to claim 1 or 2, in which the resin is a vinyl ester resin comprising only vinyl ester prepolymers as polymerizable compounds.

**4.** Material according to any one of the preceding claims, in which the resin is chosen from vinyl ester resins of bisphenol A type, vinyl ester resins of novolak type, vinyl ester resins simultaneously comprising units of bisphenol A type and novolak units, and halogenated vinyl ester resins.

**5.** Material according to any one of the preceding claims, in which the resin is a vinyl ester resin chosen from the resins, the prepolymers of which correspond to one of the following formulae (II), (III), (IV) and (V):

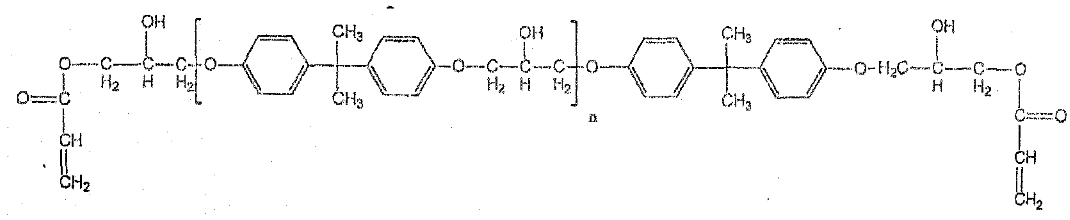

(II)

in which n is equal to 1 or 2;

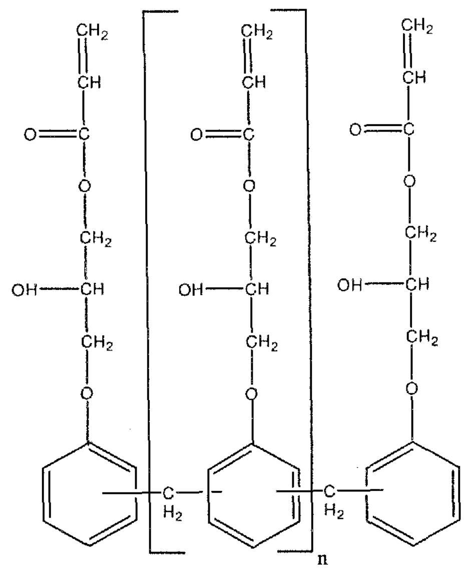

(III)

in which n is equal to 3;

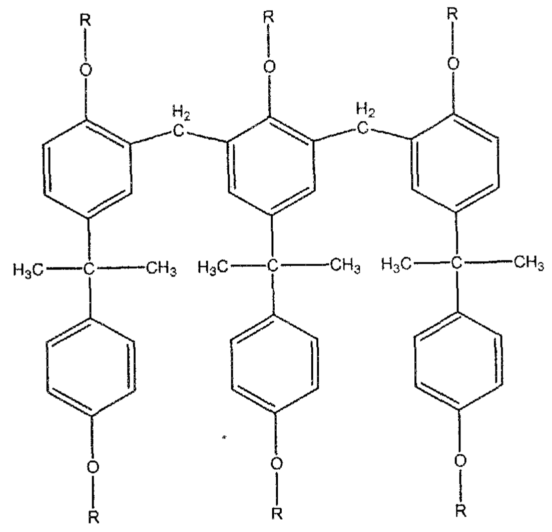

(IV)

with R:

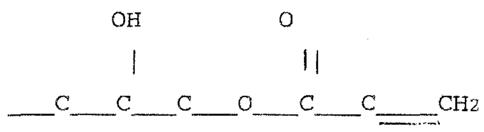

and

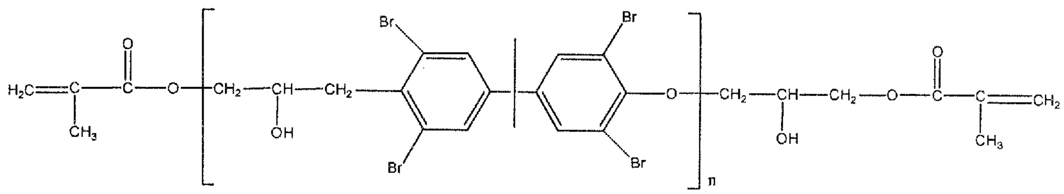

(V)

6. Material according to any one of claims 1 to 4, in which the resin is an epoxide resin chosen from the epoxide resins, the prepolymers of which correspond to either of the following formulae (VI) and (VII):

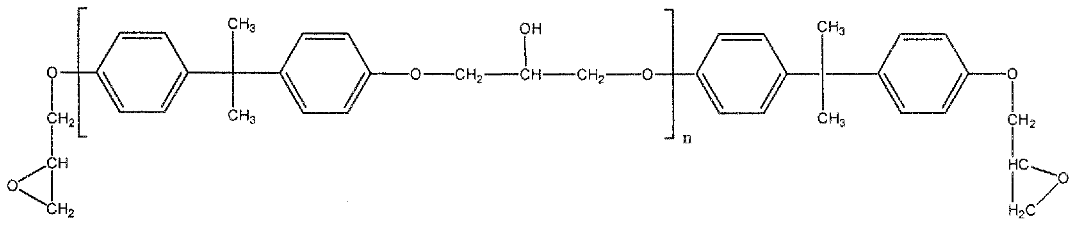

(VI)

in which n is an integer ranging from 0 to 12; and

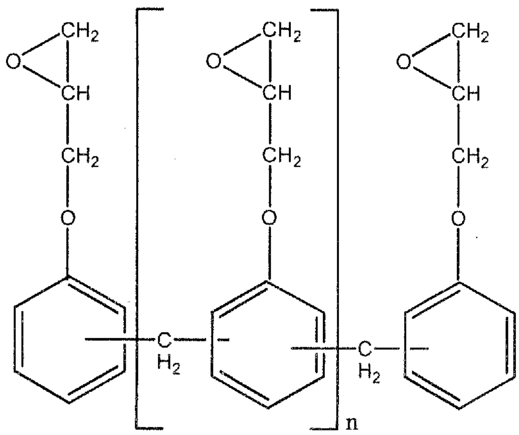

(VII)

in which n is an integer ranging from 0 to 5.

**7.** Material according to any one of claims 1 to 4, in which the resin is a blend of a vinyl ester resin and of an epoxide resin comprising the prepolymers of following formulae (VIIIa), (VIIIb) and (VIIIc) :

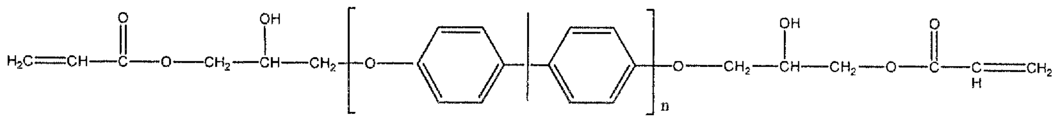

(VIIIa)

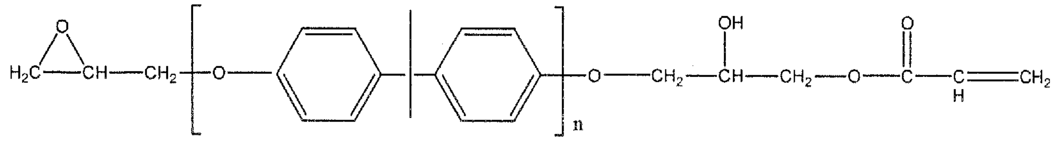

(VIIIb)

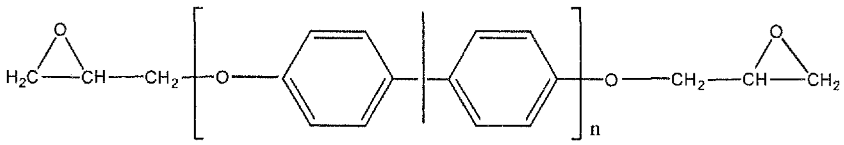

(VIIIc)

in a vinyl ester resin/epoxide resin molar ratio of 50/50.

**8.** Material according to any one of claims 1 to 7, in which the BPA-Px exhibits a molar ratio of the phosphine oxide groups to the sulphone groups which is at least equal to 20/80 and which does not exceed 40/60.

**9.** Material according to any one of claims 1 to 7, in which the BPA-Px exhibits a molar ratio of the phosphine oxide groups to the sulphone groups ranging from 20 to 30.

**10.** Material according to any one of the preceding claims, in which the resin and the thermoplastic adjuvant are present in the material in a ratio by weight ranging from 95/5 to 80/20 and preferably from 95/5 to 85/15.

**11.** Material according to any one of the preceding claims, in which the resin and the thermoplastic adjuvant are present in the material in a ratio by weight ranging from 90/10 to 85/15.

**12.** Material according to any one of the preceding claims, which additionally comprises one or more adjuvants chosen from plastic, curable and elastomeric polymers, fillers, flexibilizing agents, plasticizers, thixotropic agents, flame retardants, UV stabilizers, wetting agents, antishrink agents and colourants.

**13.** Material according to any one of the preceding claims, which exhibits a fracture toughness of greater than or equal to 1.3 $MPa.m^{1/2}$ and preferably of greater than or equal to 1.4 $MPa.m^{1/2}$.

**14.** Material according to any one of the preceding claims, exhibiting a fracture toughness of greater than or equal to 1.5 $MPa.m^{1/2}$.

**15.** Process for the manufacture of a material according to any one of claims 1 to 14, which comprises the following stages:

a) dissolving the thermoplastic adjuvant in the resin, in order to produce a homogeneous blend;
b) casting the blend in an appropriate mould and degassing it;
c) placing the blend under conditions suitable for producing demixing thereof; and
d) polymerizing the blend under cold conditions.

**16.** Process according to claim 15, in which, in stage d), polymerization is induced by electron beam ionization, ultraviolet irradiation, infrared irradiation or X-rays.

**17.** Process according to claim 15 or claim 16, in which, as the thermoplastic adjuvant is a BPA-Px, in stage a), the latter is dissolved in the resin, brought beforehand to a temperature of the order of 60 to 90°C, optionally in the presence of a non-reactive solvent.

**18.** Process according to any one of claims 15 to 17, in which, in stage c), the blend is placed at ambient temperature or is subjected to heating at a temperature not exceeding 70°C.

**19.** Composite material comprising a matrix and a reinforcement in this matrix, in which said matrix is composed of a material as defined in any one of claims 1 to 14.

**20.** Composite material according to claim 19, in which the reinforcement is chosen from glass fibres, carbon fibres, metal fibres, organic fibres and silicon carbide fibres.

**21.** Composite material according to claim 20, in which the reinforcement is chosen from glass fibres, carbon fibres, aramide fibres, polybenzoxazole fibres and boron fibres.

**22.** Use of a composite material according to any one of claims 19 to 21 in the manufacture of components for the aeronautical or aerospace industry.

**Patentansprüche**

**1.** Material umfassend wenigstens ein polymerisiertes Harz, das aus Vinylesterharzen und Epoxidharzen, die bei einer Temperatur von weniger als 70 °C polymerisiert werden können, und ihren Mischungen ausgewählt ist, sowie ein als BPA-Px bezeichnetes Poly(arylenetherdiphenylsulfon/arylenethertriphenylphosphin)-Copolymer der nachfolgenden Formel (I):

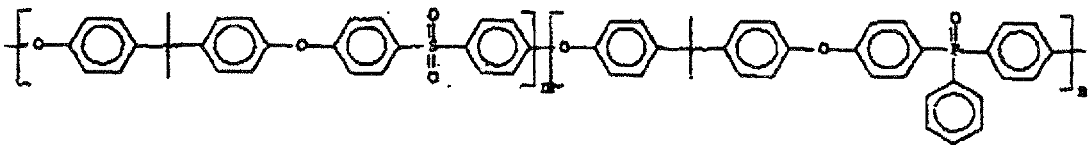

wobei x den Gehalt an Phosphinoxidgruppen bezogen auf die Gesamtheit der in dem Copolymer vorhandenen Phosphinoxid- und Sulfongruppen darstellt und durch die Formel

$$x = \frac{n}{m+n} x\ 100$$

bestimmt wird, wobei das BPA-Px in diesem Harz in Teilchenform vorliegt und das Material eine gemäß der ISO-Norm 13586:2000 bestimmte Bruchzähigkeit ($K_{Ic}$) größer oder gleich 1,2 MPa.m$^{1/2}$ aufweist.

**2.** Material gemäß Anspruch 1, wobei das Harz aus Vinylesterharzen und Epoxidharzen, die freie Hydroxygruppen umfassen, sowie ihren Mischungen ausgewählt ist.

**3.** Material gemäß Anspruch 1 oder Anspruch 2, wobei das Harz ein Vinylesterharz ist, das nur Vinylesterpräpolymere als polymerisierbare Verbindungen enthält.

**4.** Material gemäß einem der vorangehenden Ansprüche, wobei das Harz aus Vinylesterharzen des Bisphenol-A-Typs, Vinylesterharzen des Novolaktyps, Vinylesterharzen, die gleichzeitig Einheiten des Bisphenol-A-Typs und Novolakeinheiten umfassen, und halogenierten Vinylesterharzen ausgewählt ist.

**5.** Material gemäß einem der vorangehenden Ansprüche, wobei das Harz ein Vinylesterharz ist, das aus den Harzen ausgewählt ist, deren Präpolymere einer der folgenden Formeln (II), (III), (IV) und (V) entsprechen:

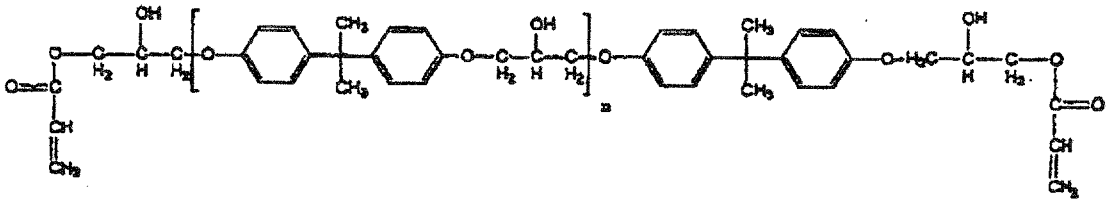

(II)

worin n 1 oder 2 ist,

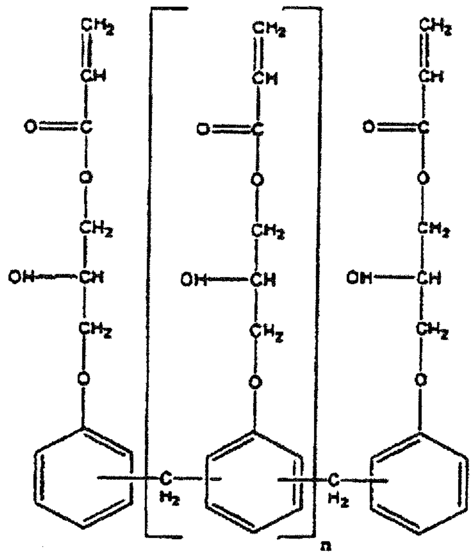

(III)

worin n 3 ist,

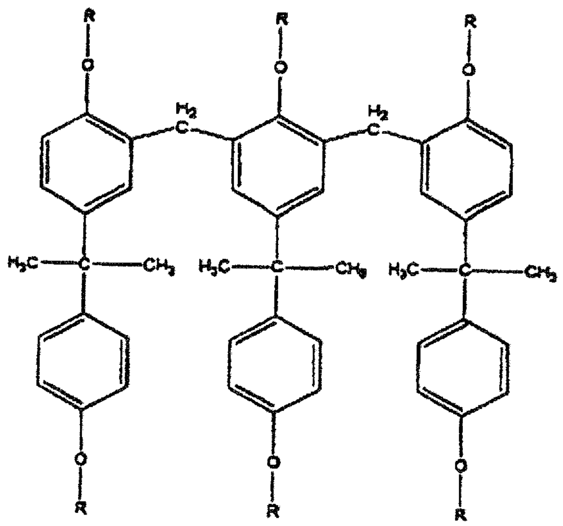

(IV)

mit R:

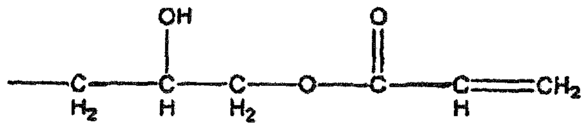

und

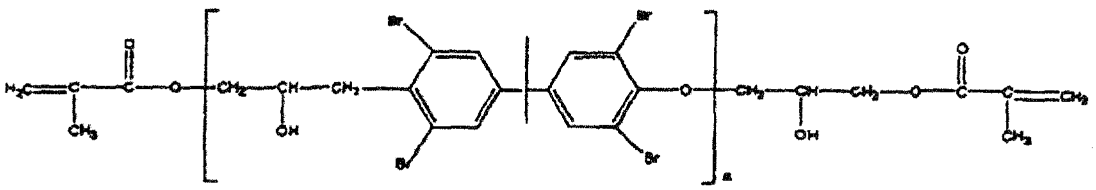

6. Material gemäß einem der Ansprüche 1 bis 4, wobei das Harz ein Epoxidharz ist, das aus den Epoxidharzen ausgewählt ist, deren Präpolymere einer der folgenden Formeln (VI) und (VII) entsprechen:

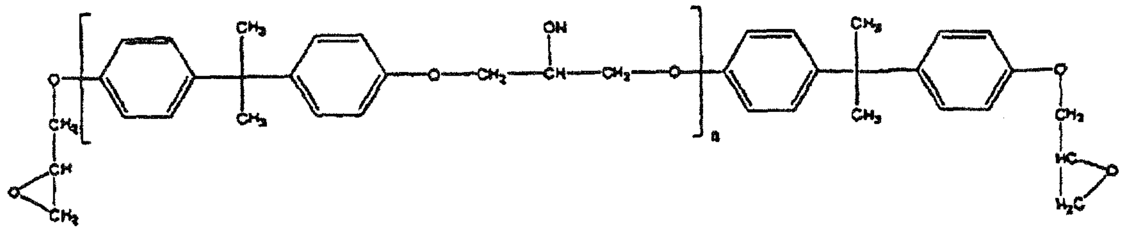

(VI)

worin n eine ganze Zahl von 0 bis 12 ist und

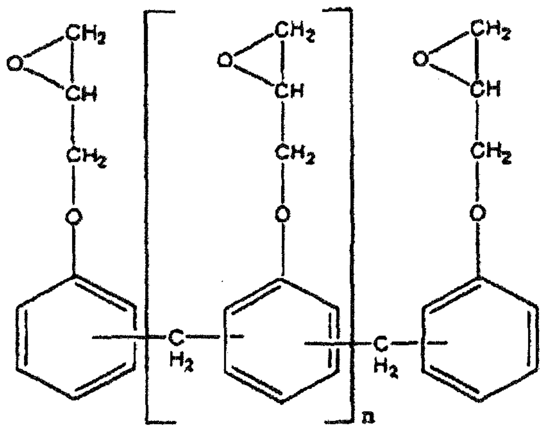

(VII)

worin n eine ganze Zahl von 0 bis 5 ist.

7. Material gemäß einem der Ansprüche 1 bis 4, wobei das Harz eine Mischung aus einem Vinylesterharz und einem Epoxidharz ist, das die Präpolymeren der folgenden Formeln (VIIIa), (VIIIb) und (VIIIc)

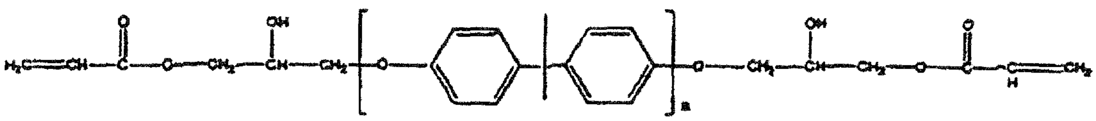

(VIIIa)

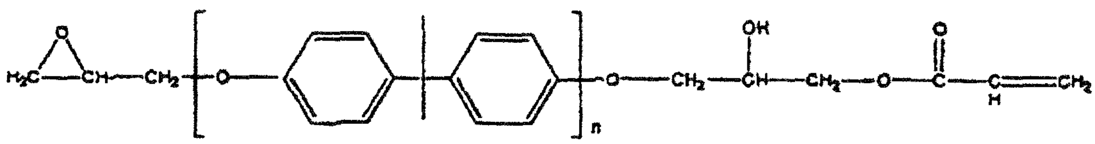

(VIIIb)

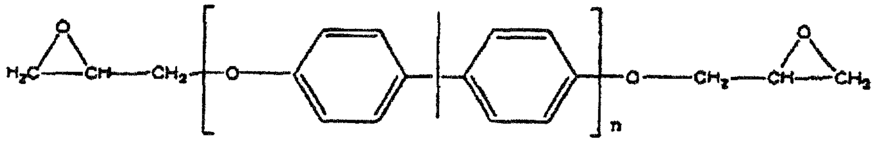

(VIIIc)

im Molverhältnis Vinylesterharz/Epoxidharz von 50/50 umfaßt.

**8.** Material gemäß einem der Ansprüche 1 bis 7, wobei das BPA-Px ein Molverhältnis der Phosphinoxidgruppen zu den Sulfongruppen von mindestens 20/80 und 40/60 nicht überschreitend aufweist.

**9.** Material gemäß einem der Ansprüche 1 bis 7, wobei das BPA-Px ein Molverhältnis der Phosphinoxidgruppen zu den Sulfongruppen von 20 bis 30 aufweist.

**10.** Material gemäß einem der vorangehenden Ansprüche, wobei das Harz und das BPA-Px in dem Material in einem Massenverhältnis von 95/5 bis 80/20 und vorzugsweise von 95/5 bis 85/15 vorliegen.

**11.** Material gemäß einem der vorangehenden Ansprüche, wobei das Harz und das BPA-Px in dem Material in einem Massenverhältnis von 90/10 bis 85/15 vorliegen.

**12.** Material gemäß einem der vorangehenden Ansprüche, das außerdem einen oder mehr Hilfsstoffe umfaßt, die aus härtbaren und elastomeren Kunststoffen, Füllstoffen, Elastizitätsvermittlern, Weichmachern, Thixotropiemitteln, flammwidrigen Mitteln, UV-Stabilisatoren, Feuchtemitteln, Antischrumpfmitteln und Farbmitteln ausgewählt sind.

**13.** Material gemäß einem der vorangehenden Ansprüche, das eine Bruchzähigkeit größer oder gleich 1,3 $MPa.m^{1/2}$ und vorzugsweise größer oder gleich 1,4 $MPa.m^{1/2}$ aufweist.

**14.** Material gemäß einem der vorangehenden Ansprüche, das eine Bruchzähigkeit größer oder gleich 1,5 $MPa.m^{1/2}$ aufweist.

**15.** Verfahren zur Herstellung eines Materials gemäß einem der Ansprüche 1 bis 14, das die folgenden Schritte umfaßt:

a) Lösen des BPA-Px in dem Harz unter Erhalten einer homogenen Mischung,
b) Gießen der Mischung in eine geeignete Form und ihr Entgasen,
c) Aussetzen der Mischung zu ihrem Entmischen geeigneten Bedingungen,
d) Polymerisieren der Mischung in der Kälte.

**16.** Verfahren gemäß Anspruch 15, wobei in Schritt d) die Polymerisation durch Elektronenstrahlionisation, Ultraviolettstrahlung, Infrarotstrahlung oder Röntgenstrahlung initiiert wird.

**17.** Verfahren gemäß Anspruch 15 oder Anspruch 16, wobei in Schritt a) das BPA-Px in einem zuvor auf eine Temperatur von etwa 60 bis 90 °C gebrachten Harz gegebenenfalls in Gegenwart eines nicht reaktionsfähigen Lösungsmittels gelöst wird.

**18.** Verfahren gemäß einem der Ansprüche 15 bis 17, wobei in Schritt c) die Mischung Raumtemperatur ausgesetzt wird oder einem Erhitzen auf eine 70 °C nicht überschreitende Temperatur unterzogen wird.

**19.** Verbundmaterial umfassend eine Matrix und eine Verstärkung in dieser Matrix, wobei sich diese Matrix aus einem wie in einem der Ansprüche 1 bis 14 definierten Material zusammensetzt.

**20.** Verbundmaterial gemäß Anspruch 19, wobei die Verstärkung aus Glasfasern, Kohlefasern, Metallfasern, organischen Fasern und Siliziumcarbidfasern ausgewählt ist.

**21.** Verbundmaterial gemäß Anspruch 20, wobei die Verstärkung aus Glasfasern, Kohlefasern, Aramidfasern, Polybenzoxazolfasern und Borfasern ausgewählt ist.

**22.** Verwendung eines Verbundmaterials gemäß einem der Ansprüche 19 bis 21 zur Herstellung von Komponenten für die Luft- und Raumfahrtindustrie.

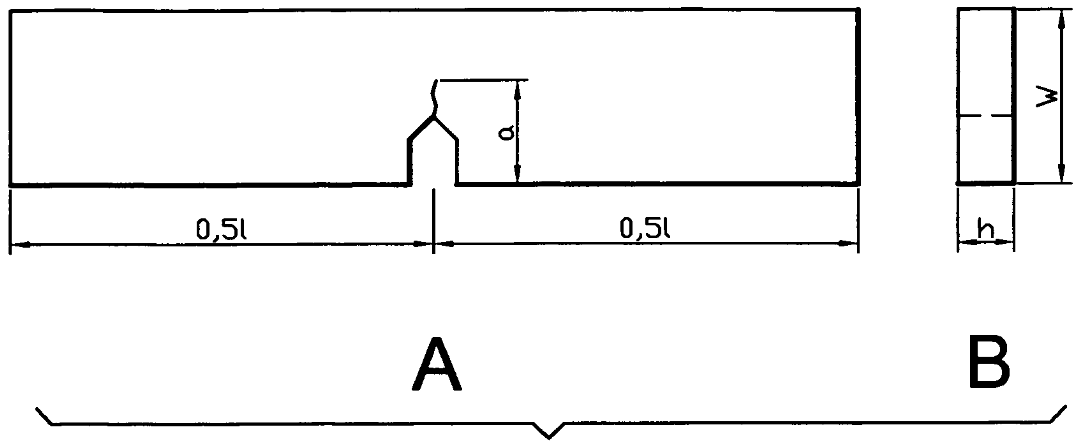


FIG. 1

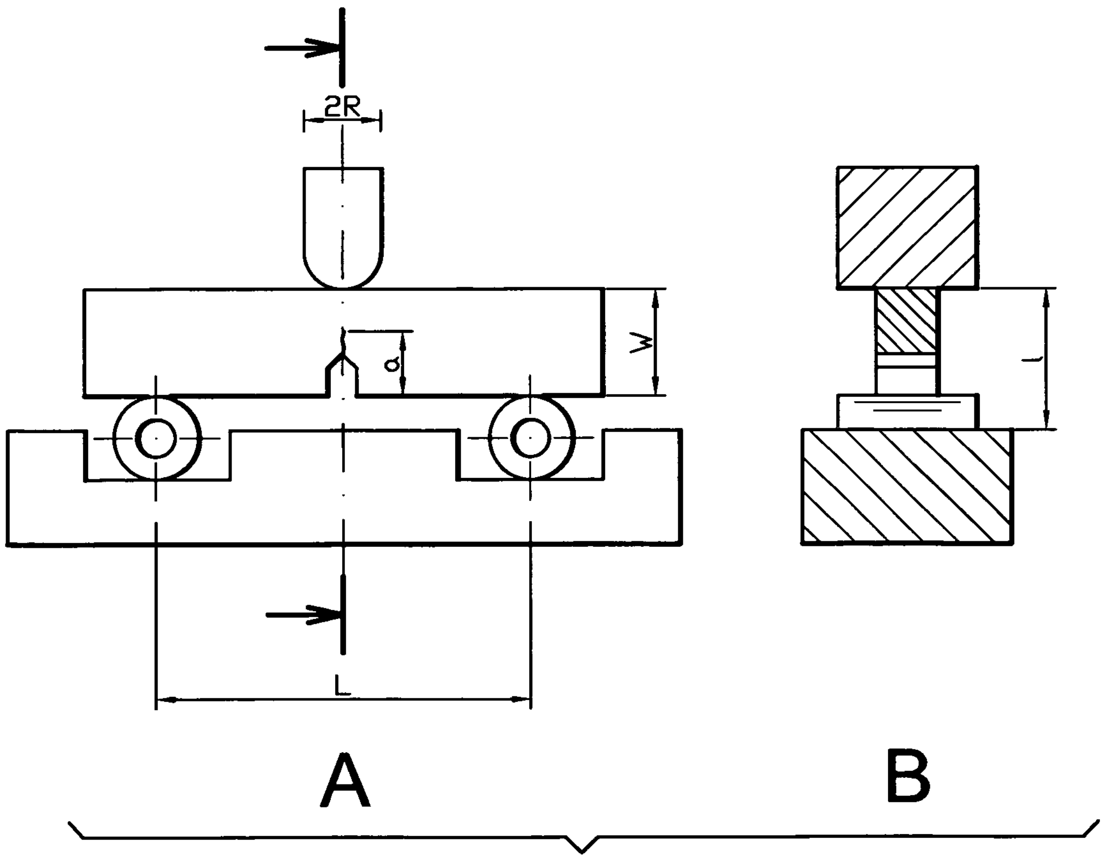


FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5434226 A

### Littérature non-brevet citée dans la description

- **WANG et al.** *Journal of Polymer Science,* vol. 38, 2409-2421
- **MCGRATH et al.** *Polymer Engineering and Science,* 1997, vol. 9, 1501-1511
- **MCGRATH et al.** *Polymer Engineering and Science,* 1997, vol. 37 (9), 1501-1511